# EUROPEAN PATENT SPECIFICATION

(11) **EP 0 442 380 B1**
(45) Date of publication and mention of the grant of the patent: **22.05.1996**
(21) Application number: 91101692.1
(22) Date of filing: 07.02.1991
(51) Int. Cl.: C09J 5/04

(54) **Contact adhering method**
Kontaktklebemethode
Méthode d'adhésion par contact

(30) Priority: 13.02.1990 JP 31954/90; 27.09.1990 JP 258433/90
(43) Date of publication of application: 21.08.1991
(73) Proprietor: CEMEDINE CO., LTD., Shinagawa-ku, Tokyo (JP)
(72) Inventor: Nishikawa, Nobuyoshi, Satte-shi, Saitama-ken (JP); Okuno, Eiichi, Shimotsuga-gun, Tochigi-ken (JP); Horie, Toshiharu, Sashima-gun, Ibaragi-ken (JP); Makino, Zyunzo, Ohmiya-shi, Saitama-ken (JP); Aoki, Hiroshi, Lions Garden, Ohmiya-shi, Saitama-ken (JP)
(74) Representative: Grünecker, Kinkeldey, Stockmair & Schwanhäusser Anwaltssozietät

(56) References cited:
- EP-A- 0 293 733
- AU-B- 8 653 399
- US-A- 3 971 751

## Description

This invention relates to a contact adhering method, in which adherends are fastened by means of an adhesive which does not contain any solvent and can be cured without any heating process.

Conventional solvent elastomeric adhesives (rubber cement) have been easy to fasten adherends, since these adhesives do not need that adherends be temporarily kept pressed until they are firmly fastened, and since the adherends can be fastened in a certain period of time (open time). However such elastomeric adhesives include solvents as indispensable components, which are toxic to man and flammable.

Various efforts and research have been carried out so as to solve the above inconveniences of the conventional solvent elastomeric adhesives through resorting to such alternatives as (1) high solidification, (2) non-use of solvents, and (3) use of aqueous contact (aqueous emulsion type) adhesives. However these alternatives are insufficient for the following reasons.
(1) When it is highly solidified to remove the solvent, the adhesive cannot maintain its effective adhesiveness. (2) Use of hot melt adhesives is conceivable in place of the solvent adhesives. The hot melt adhesives are easy to use, but should be heated and are difficult to be applied to spacious adherends. (3) Aqueous adhesives are safe in the viewpoint of hygiene and non-flammability, but have low contact ability. The aqueous adhesives are applicable only to water-absorbing adherends such as wood, and take time to be dried.

With a conventional adhering method using a moisture cure type adhesive, the adhesive is applied on a single side (single spread) or both sides (double spread) of adherends, and the adherends are fastened so as to cure the adhesive. In such a case the adhesive is slow to cure. Even when the adhesive is applied to adherends having a good moisture permeability, it will take one or two days for the adhesive to cure under room temperature. In addition, the adherends have to be temporarily fastened by certain means. This means the adhering work is very troublesome. When fastening adherends without moisture permeability such as steel sheets, the adhesive takes time to cure, which makes the work even more troublesome.

The present inventors have paid attention to the phenomenon that the moisture cure type adhesive reacts to moisture under room temperature, cures to produce a thin film, and shows tack while producing the thin film. They have tried to use the tack of the adhesive, thereby solving the problems experienced with conventional adhering methods.

It is therefore an object of this invention to provide a novel contact adhering method. The adhesive used for this method is safe from the viewpoint of hygiene and effective for fire prevention since it does not include any solvent. The adhesive is of a contact type, which enables adherends to be fastened soon after the adhesive has been applied thereto. No temporary fastening is necessary after the adherends are fastened adhesive, which facilitates the adhering work. In addition, the adhesive is applicable to any adherends since it is not of an aqueous contact type (aqueous emulsion type). The adhesive is cured under room temperature and does not need any heating. Different from the conventional moisture cure adhesives, the adhesive used in this invention is applicable to adherends which do not have any moisture permeability and fastened themselves in a short period of time.

The above object of this invention is accomplished by a contact adhering method comprising the steps of:
(a) applying a layer of a moisture curable adhesive composed of (1) a copolymer including a reactive silicon group whose molecular chain substantially consists of (i) alkylacrylate and/or alkylmethacrylate monomeric units having an alkyl group with 1 to 8 carbons, and (ii) alkylacrylate and/or alkylmethacrylate monomeric units having an alkyl group with 10 or more carbons, and (2) a polymer substantially consisting of oxyalkylene including a reactive silicon group; to at least one of two adherends;
(b) maintaining the two adherends in non-contact with each other until the surface of the layer of moisture curable adhesive develops tack as a result of exposure to atmospheric moisture; and
(c) fastening the two adherends.

According to the method, the adhesive layer reacts to the moisture in the air or that supplied forcibly, and becomes tacky while forming a thin film on the surface. When the adhesive layer is too thick, the resulting thin film cannot be formed uniformly, which will cause insufficient tack and lower the contact ability of the adhesive.

The adhesive comprising the compound disclosed in Japanese Patent Laid-Open Publication No. 112642/1988 (EP-A-0265929), which is used in the method of the invention, has a good adhesive property (such as tack range). The cited Japanese Publication No. 112642/1988 (EP-A-0265929) exemplifies a curing compound, which is composed of (1) a copolymer including a reactive silicon group whose molecular chain substantially consists of (i) alkylacrylate and/or alkylmethacrylate monomeric units having an alkyl group with 1 to 8 carbons, and (ii) alkylacrylate and/or alkylmethacrylate monomeric units having an alkyl group with 10 or more carbons, and (2) a polymer substantially consisting of oxyalkylene including a reactive silicon group. The reactive silicon group represents a functional group including silicon which can form cross linking through siloxane linkage. A preferred example of the reactive silicon group will be expressed by the general formula (I): 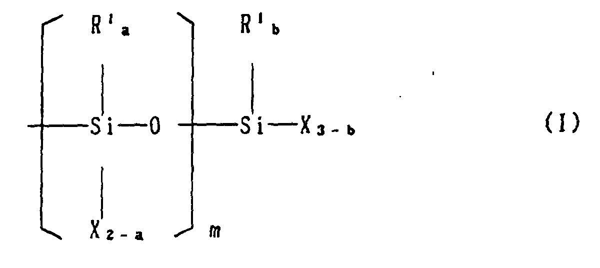 wherein R¹ represents a substituted or unsubstituted monovalent organic group having 1 to 20 carbon atoms, or a triorganosiloxy group; X represents a hydroxyl group or a heterogeneous or homogeneous hydrolyzable group; a is an integer of 0, 1 or 2; b is an integer of 0, 1, 2 or 3, provided that a is not 2 when b is 3; and m is an integer of 0 to 18.

A preferable reactive and functional silicon group is expressed by: 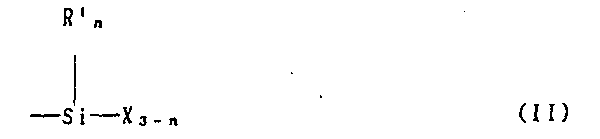 wherein R¹ is as defined in formula (I) and n is an integer of 0, 1 or 2.

In order to make the adhering method of this invention more effective, the following compounds may be added to the foregoing adhesive : vinyl compounds such as a vinylchloride (co)polymer, phenol resin compound, petroleum resin, terpene phenol resin, a tackifier such as rosin ester resin, preliminarily reacted epoxy resin as exemplified in Japanese Patent Laid-Open Publication No. 291918/1988, or acrylate and/or methacrylate compounds such as butylacrylate copolymer.

The adhesive used in the method is obtained by mixing 100 parts of any one of the above-mentioned compounds with 0.1 to 10 parts of an accelerator.

The accelerator may be any one of organic tin compounds, acidic phosphates, reactants of acidic phosphates between amines, saturated or unsaturated polycarboxylic acid or acid anhydrides thereof, and organic titanate compounds.

Examples of the organic tin compounds are dibutyltin dilaurate, dioctyltin dimaleate, dibutyltin phthalate, primary tin octylate, dibutyltin methoxide, dibutyltin diacetylacetate, and dibutyltin divarsatate.

Examples of the organic titanate compounds are titanates such as tetrabutyl titanate, tetraisopropyl titanate, and triethanolamine titanate.

If necessary, the adhesive is usually added with diluents (phthalate plasticizers such as dioctyl phthalate, butylbenzyl phthalate, plasticizers such as epoxydated soybean oil, solvents such as methanol, ethanol, and toluene, reactive diluents), fillers ( heavy calcium carbonate, light calcium carbonate and gluey calcium carbonate, kaolin, talc, silica, titanium oxide, aluminum silicate, magnesium oxide, zinc oxide, and carbon black), tackifier (silane coupling agents such as amino-silane, epoxy-silane), drip-preventing agents, coloring agents, and antiseptics.

The adhesive is good in tack formation and storage stability, and hence very effective for the purpose of this invention.

The adhesive is preferably of a one-part type, but also may be of a two-part type.

The adhesive can be applied to either both sides or a single side of the adherends similarly to the conventional contact elastomeric adhesives. According to the method of this invention, the adhesive is very effective when it is applied either on a single side or both sides of the adherends.

The adhesive may be applied by conventional methods such as hands, spatulas, rollers or sprays.

The adhesive can be heated or moistened so as to increase tack and accelerate curing.

The tack is formed while the adhesive layer reacts to the moisture in the air and forms a thin film. Therefore if it is applied too thickly, the adhesive cannot form a sufficient tacking force (tackiness), and becomes weak in the contact ability. It is therefore preferable that the adhesive be applied in the thickness of approximately 1 mm or less so as to increase the tack.

According to this invention, the adhering method features that the adhering work can be easily carried out by using an adhesive which does not include any solvent and is positively cured by using the moisture in the air. In addition, although the adhesive is of the moisture cure type, the adherends can be fastened in a short period of time under the room temperature, which has been very difficult with conventional moisture cure type adhesives.

### EXAMPLES

Examples of the adhesives applicable to the method according to the invention are given hereinafter.

### Synthesis Examples 1 to 5:

Acrylate and methacrylate polymers were made according to Synthesis Examples 1 to 5 disclosed in Japanese Patent Laid-Open Publication No. 112642/1988 (EP-A-0265929).

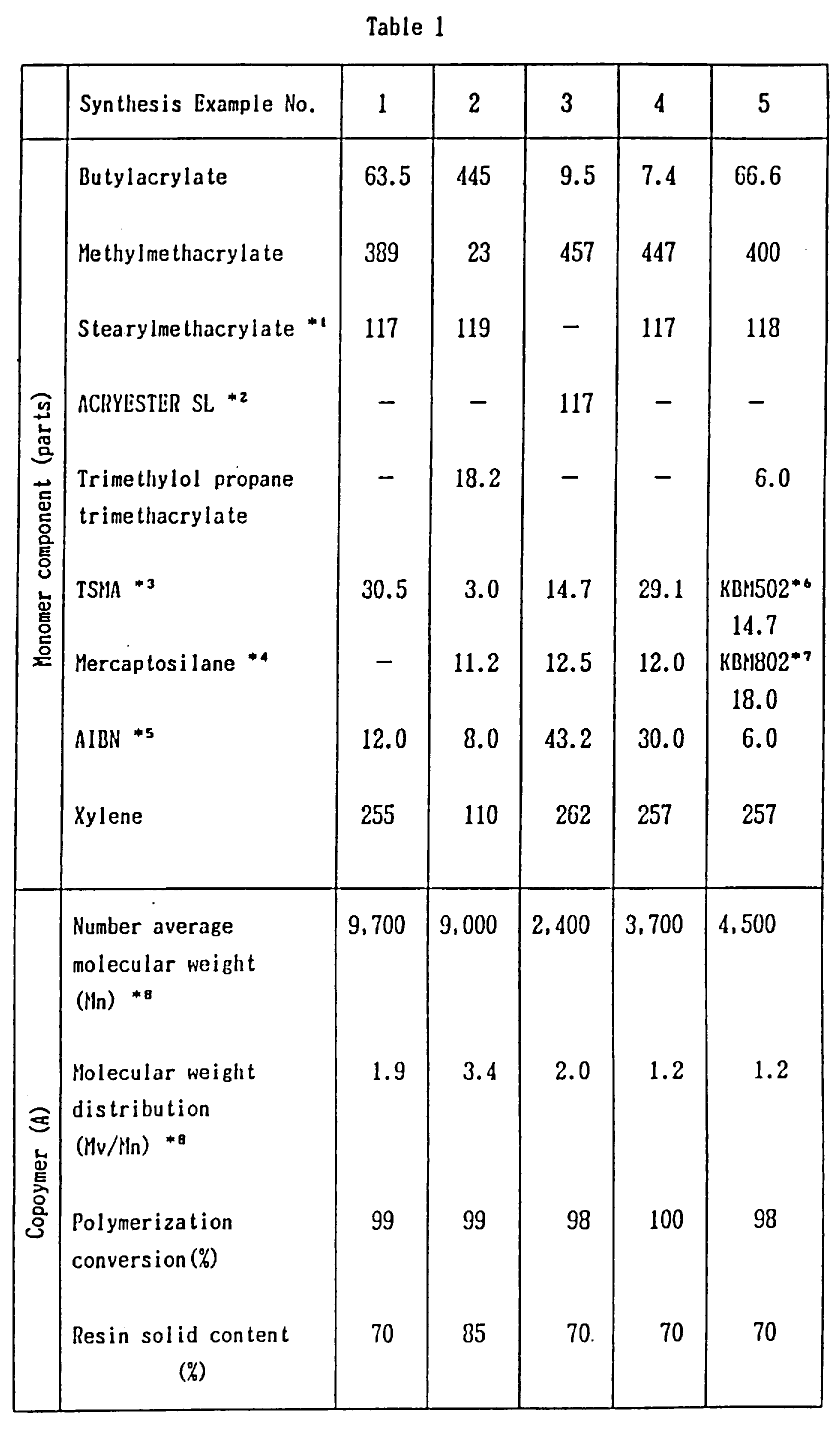

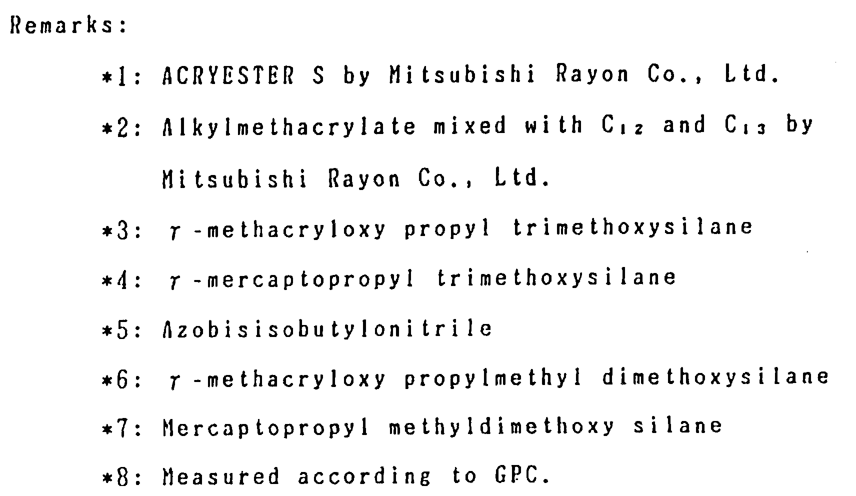

### Synthesis Examples 6 and 7:

According to Synthesis Examples 8 and 9 of Japanese Patent Laid-Open Publication No. 112642/1988 (EP-A-0265929), polyoxypropylene having the following group at the molecular end was made.

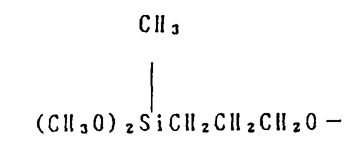

### Examples 1 to 8, and Comparative Example 1

The adhesive was prepared by mixing the compounds shown in Table 2, and was thinly applied on test pieces of a plywood. Under the ambient temperature of 20°C and the relative humidity of 65%, the following items were examined: the period of time required for tack to form, and tack intensity. The test pieces were fastened in five minutes after the adhesive became tacky, and were left as they were all day long. Then the fixability of the test pieces were checked. The results of the test are shown in Table 3.

The results substantially the same as those of Examples 2 and 3 were obtained when the polymers of Synthesis Examples 2 to 5 were used instead of the polymer for Synthesis Example 1.

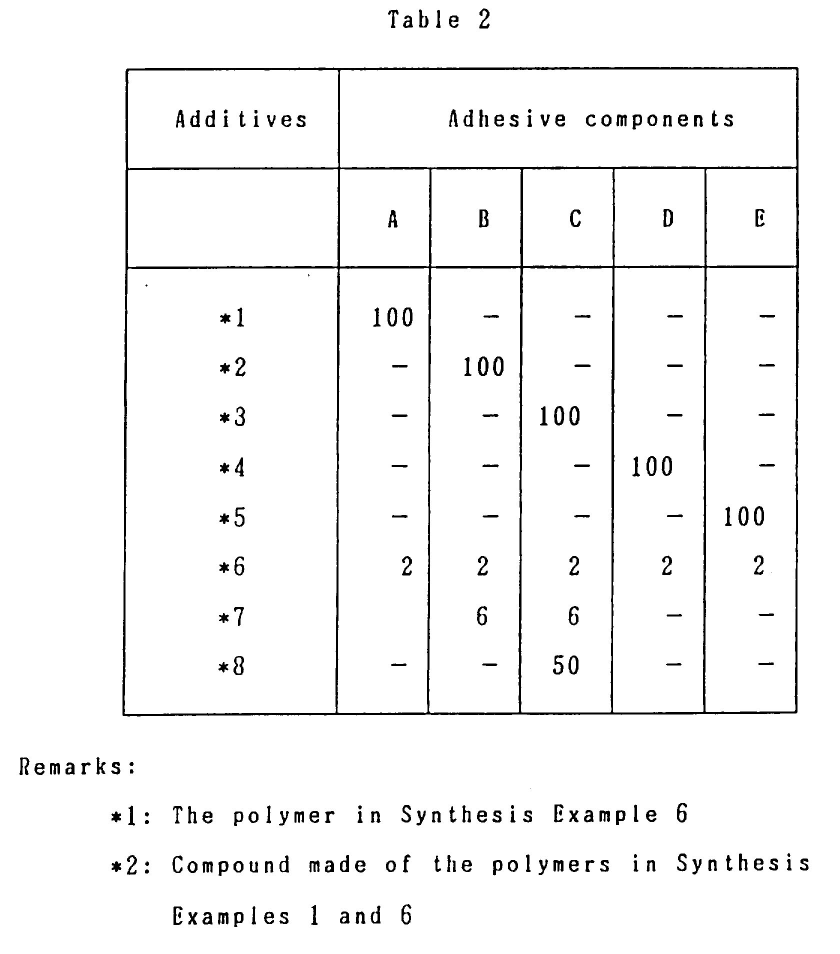

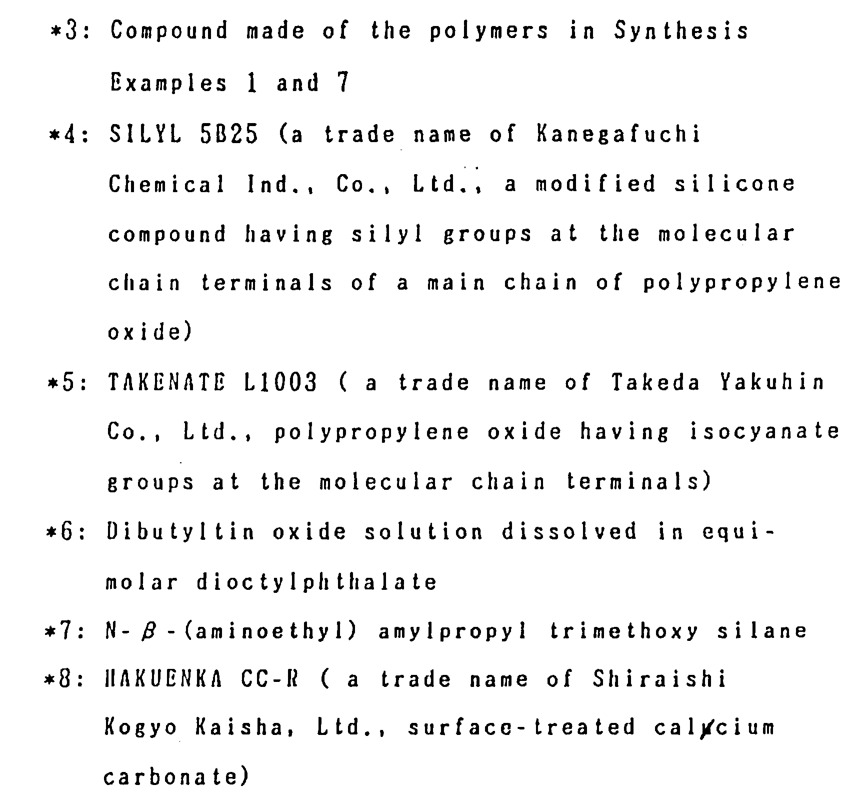

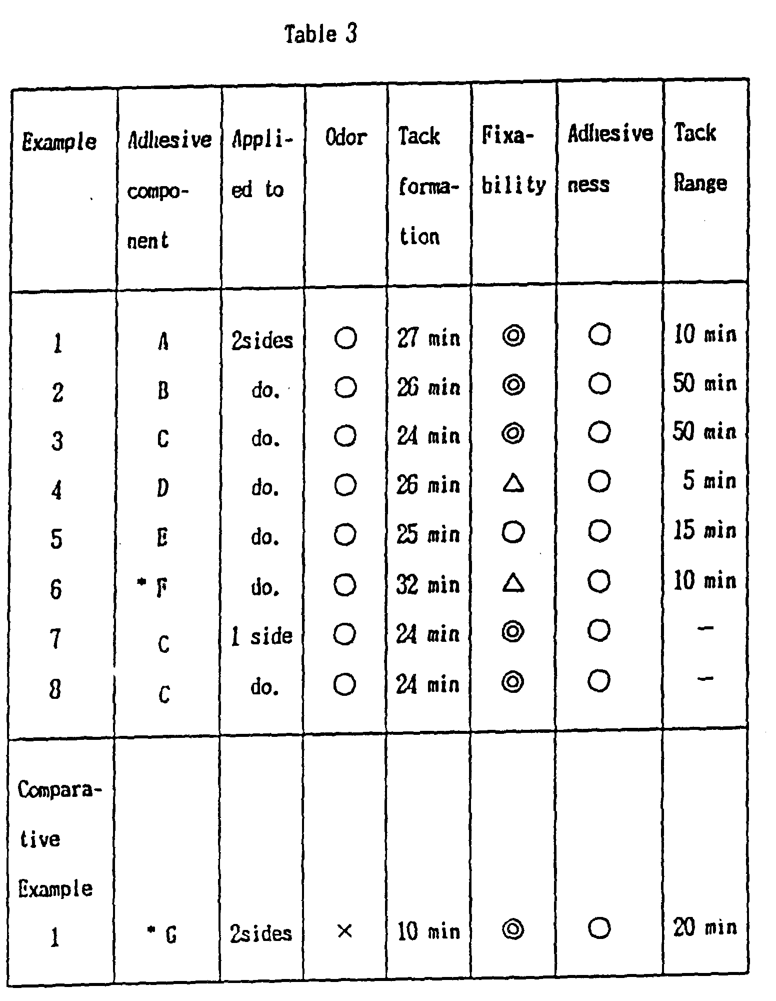

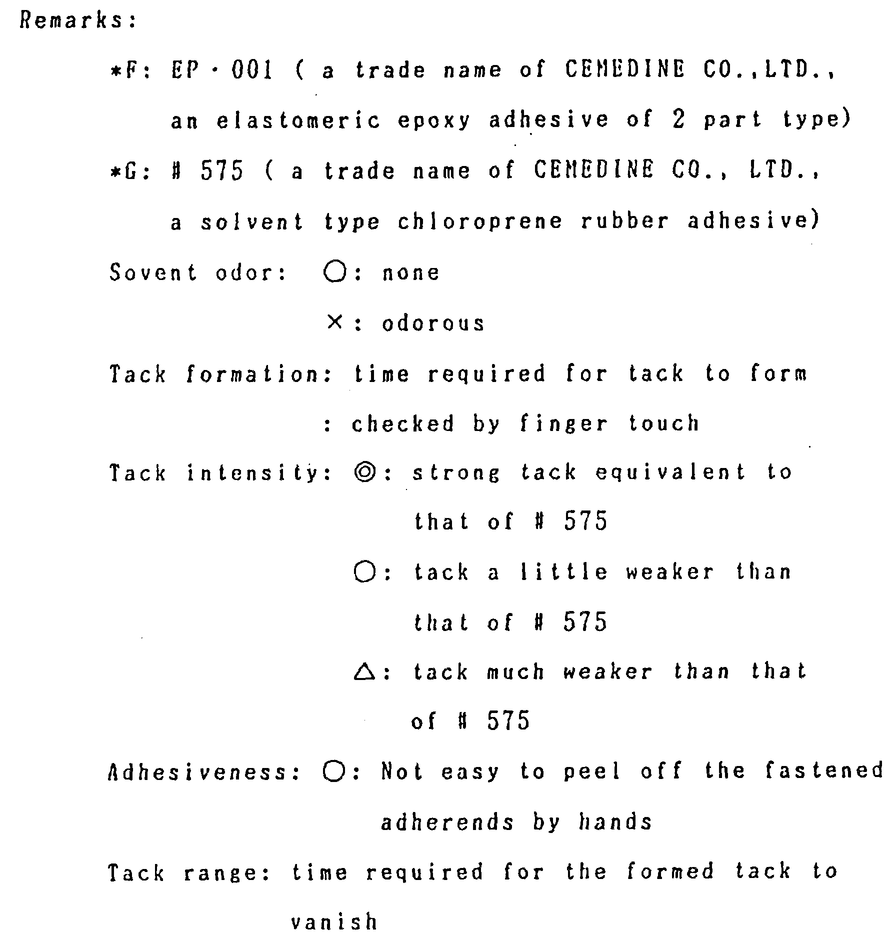

In each Example, it was easy for the adhesive to fasten the adherends because the adhesive was free from solvent and could offer contact adhering.

The adhesive had good adhesiveness after a one day curing period.

### Examples 9 to 12 and Comparative Examples 2 and 3:

The adhesive composed of the compounds B and C shown in Table 2 and the solvent elastomeric adhesive # 575 were applied on a mild steel plate with a thickness of 0.5 mm under room temperature of 20 °C and the relative humidity of 65%. The test pieces were fastened in 20 minutes after the adhesive formed tack. The test pieces were checked in terms of the fixability immediately after they were fastened. Then the test pieces were left for one day, and were checked in terms of the adhesiveness. In addition, the test pieces were fastened by a method which is usually used for a conventional moisture cure adhesive. To be more specific, the adhesive made of the compound C was applied to a mild steel plate as test pieces. The test pieces were fastened with the adhesive having a thickness of 1 mm. The test pieces were checked in terms of the fixability and the adhesiveness after being left for one day. The results are shown in Table 4.

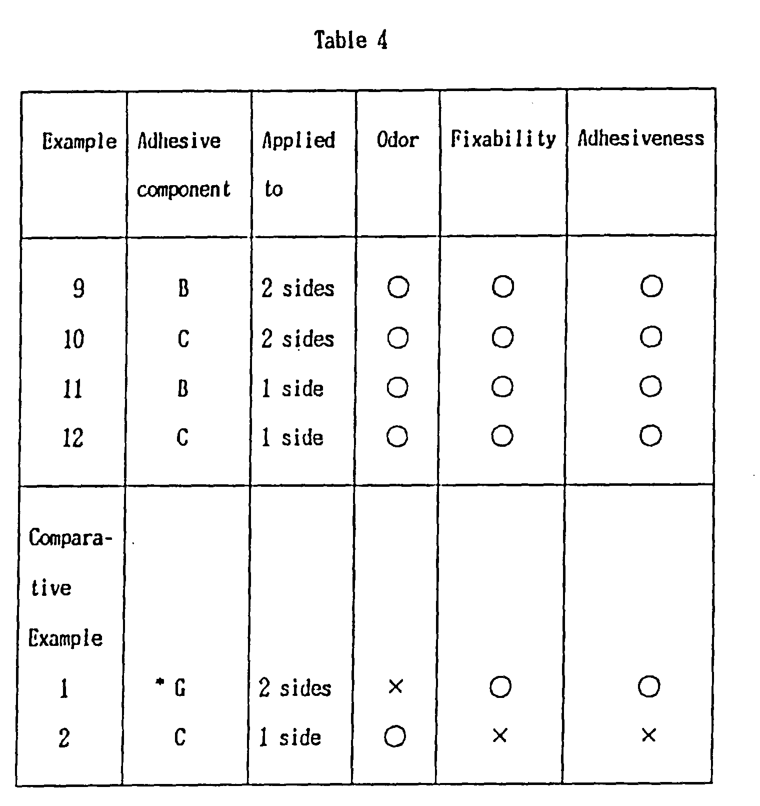

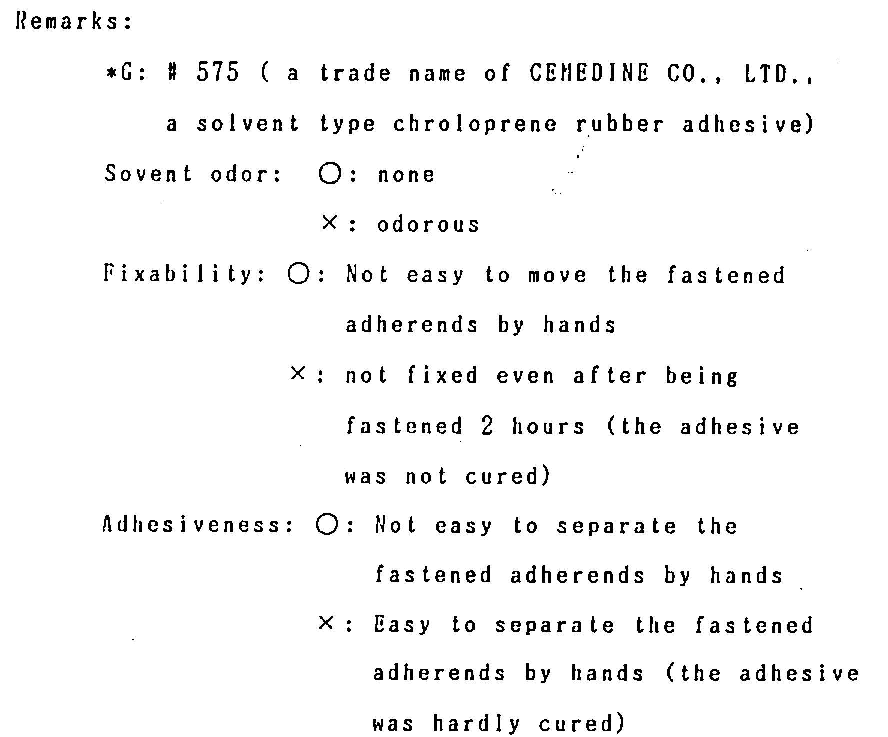

In each Example, the adhesives were free from solvent odor and showed excellent contact ability and fixability to those of elastomeric adhesives. The adherends could be esily fastened without the use of a fixing tool due to the excellent adhesiveness. In addition, the adherends were fixed to be movable immediately after they are fastened with the adhesive. Although the adhesive is of the moisture cure type, adhesiveness of the fastened adherends were good even after the adherends were left as they were for a day at the temperature of 20 °C. The adhesive of Comparative Example 2 emmitted a strong solvent odor. In Comparative Example 3 of a conventional adhering method, the adhesive could not offer contact ability and required a long time to be cured, and cured poorly after a one day curing period.

## Claims

1. A contact adhering method comprising the steps of:
(a) applying a layer of a moisture curable adhesive composed of (1) a copolymer including a reactive silicon group whose molecular chain substantially consists of (i) alkylacrylate and/or alkylmethacrylate monomeric units having an alkyl group with 1 to 8 carbons, and (ii) alkylacrylate and/or alkylmethacrylate monomeric units having an alkyl group with 10 or more carbons, and (2) a polymer substantially consisting of oxyalkylene including a reactive silicon group; to at least one of two adherends;
(b) maintaining the two adherends in non-contact with each other until the surface of the layer of moisture curable adhesive develops tack as a result of exposure to atmospheric moisture; and
(c) fastening the two adherends.

2. The contact adhering method according to claim 1, wherein the thickness of the layer(s) of the moisture curable adhesive is 1 mm or less.

3. The contact adhering method according to claim 1 or 2 wherein said reactive silicon group is represented by the following general formulae (I) and/or (II): 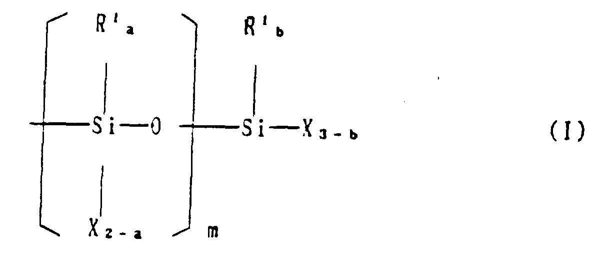 wherein R¹ represents a substituted or unsubstituted monovalent organic group having I to 20 carbon atoms, or a triorganosiloxy group; X represents a hydroxyl group or a heterogeneous or homogeneous hydrolyzable group; a is an integer of 0, 1 or 2; b is an integer of 0, 1, 2 or 3, provided that a is not 2 when b is 3; and m is an integer of 0 to 18; 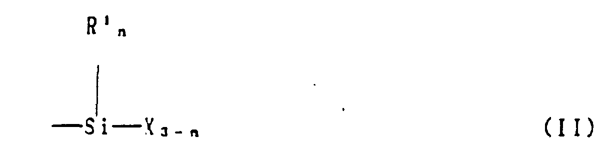 wherein R¹ is as defined in formula (I) and n is an integer of 0, 1 or 2.

## Patentansprüche

1. Kontaktklebeverfahren, umfassend die Schritte:
(a) Auftragen einer Schicht eines durch Feuchtigkeit härtbaren Klebstoffs, zusammengesetzt aus (1) einem Copolymer, das eine reaktive Siliciumgruppe einschließt, dessen Molekülkette im wesentlichen aus (i) Alkylacrylat- und/oder Alkylmethacrylat-Monomereinheiten mit einer Alkylgruppe mit 1 bis 8 Kohlenstoffatomen und (ii) Alkylacrylat- und/oder Alkylmethacrylat-Monomereinheiten mit einer Alkylgruppe mit 10 oder mehr Kohlenstoffatomen besteht, und (2) einem Polymer, das im wesentlichen aus einem Oxyalkylen besteht, das eine reaktive Siliciumgruppe einschließt, auf mindestens einen der zwei zu klebenden Gegenstände;
(b) Halten der zwei zu klebenden Gegenstände, so daß sie sich nicht berühren, bis die Oberfläche der Schicht des durch Feuchtigkeit härtbaren Klebstoffs im Ergebnis der Einwirkung von atmosphärischer Feuchtigkeit Klebrigkeit entwikkelt; und
(c) Verbinden der zwei zu klebenden Gegenstände.

2. Kontaktklebeverfahren nach Anspruch 1, wobei die Dicke der Schicht(en) des durch Feuchtigkeit härtbaren Klebstoffs 1 mm oder weniger ist.

3. Kontaktklebeverfahren nach Anspruch 1 oder 2, wobei die reaktive Siliciumgruppe wiedergegeben wird durch nachstehende allgemeine Formeln (I) und/oder (II): 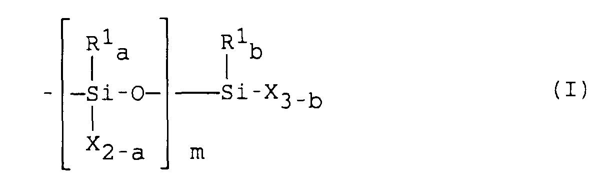 worin R¹ eine substituierte oder unsubstituierte einwertige organische Gruppe mit 1 bis 20 Kohlenstoffatomen oder eine Triorganosiloxy-Gruppe wiedergibt; X eine Hydroxylgruppe oder eine heterogen oder homogen hydrolysierbare Gruppe wiedergibt; a eine ganze Zahl von 0, 1 oder 2 ist; b eine ganze Zahl von 0, 1, 2 oder 3 ist, mit der Maßgabe, daß a nicht 2 ist, wenn b 3 ist; und m eine ganze Zahl von 0 bis 18 ist; 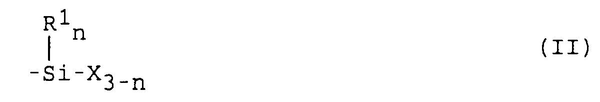 worin R¹ wie in Formel (I) definiert ist und n eine ganze Zahl von 0, 1 oder 2 ist.

## Revendications

1. Procédé d'adhésion par contact comprenant les étapes de :
(a) application d'une couche d'adhésif réagissant sous l'effet de l'humidité composée (1) d'un copolymère comprenant un groupement silicone réactif dont la chaîne moléculaire est essentiellement constituée (i) d'unités de monomères d'alkyl-acrylate et/ou d'alkyl-méthacrylate ayant un groupement alkyle comportant de 1 à 8 carbones, et (ii) d'unités de monomères d'alkyl-acrylate et/ou d'alkyl-méthacrylate ayant un groupement alkyle comportant 10 ou plus carbones, et (2) d'un polymère constitué essentiellement d'un oxyalkylène comprenant un groupement silicone réactif; sur une ou deux pièces à unir;
(b) maintien des deux pièces à unir sans contact l'une avec l'autre jusqu'à ce que la surface de la couche d'adhésif réagissant sous l'effet de l'humidité développe une adhésivité consécutive à l'exposition à l'humidité atmosphérique; et
(c) jonction du deux pièces à unir.

2. Procédé d'adhésion par contact selon la revendication 1, dans lequel l'épaisseur de la ou des couche(s) d'adhésif réagissant sous l'effet de l'humidité est de 1 mm ou de moins de 1 mm.

3. Procédé d'adhésion par contact selon la revendication 1 ou la revendication 2, dans lequel ledit groupement silicone réactif est représenté par les formules générales suivantes (I) et/ou (II): 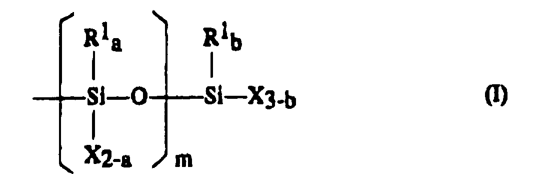 dans laquelle R¹ représente un groupement organique monovalent substitué ou non comportant de 1 à 20 atomes de carbone, ou un groupement triorganosiloxy; X représente un groupement hydroxyle ou un groupement hétérogène ou homogène hydrolysable; a est un entier égal à 0, 1 ou 2; b est un entier égal à 0, 1, 2 ou 3, à condition que a soit différent de 2 lorsque b est égal à 3; et m est un entier compris entre 0 et 18; 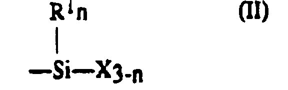 dans laquelle R¹ est tel que défini pour la formula (I) et n est un entier égal à 0,1 ou 2.
